(19) **Europäisches Patentamt**
**European Patent Office**
**Office européen des brevets**

(11) **EP 2 075 924 A1**

(12) **EUROPEAN PATENT APPLICATION**
published in accordance with Art. 153(4) EPC

(43) Date of publication:
**01.07.2009 Bulletin 2009/27**

(51) Int Cl.:
*H04B 7/005* (2006.01)   *H04B 3/10* (2006.01)

(21) Application number: **07828592.1**

(22) Date of filing: **27.09.2007**

(86) International application number:
**PCT/JP2007/068846**

(87) International publication number:
**WO 2008/041612 (10.04.2008 Gazette 2008/15)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **29.09.2006 JP 2006268902**

(71) Applicant: **Panasonic Corporation Kadoma-shi Osaka 571-8501 (JP)**

(72) Inventors:
• **TAKANO, Haruka,**
**c/o Panasonic Corporation**
**Osaka 540-6207 (JP)**
• **KUMAZAWA, Machiya,**
**c/o Panasonic Corporation**
**Osaka 540-6207 (JP)**

(74) Representative: **Grünecker, Kinkeldey, Stockmair & Schwanhäusser Anwaltssozietät Leopoldstrasse 4 80802 München (DE)**

(54) **WAVEFORM EQUALIZING DEVICE**

(57) Tap coefficients for a filter for removing a ghost signal are converged to optimum values in a short time. The waveform equalizing device includes: an initial tap coefficient generation section for determining and outputting the initial values of tap coefficients for a FIR filter and an IIR filter based on a plurality of correlation values; and a tap coefficient updating section for outputting the initial values of tap coefficients for the FIR filter and the IIR filter to these filters and updating tap coefficients for these filters based on error information. The initial tap coefficient generation section reverses the order of values, among the plurality of correlation values, corresponding to delays within a predetermined range to determine the order-reversed values as the initial values of tap coefficients for the FIR filter corresponding to the delays within the predetermined range, and also reverses the signs of values, among the plurality of correlation values, corresponding to delays exceeding the predetermined range to determine the sign-reversed values as the initial values of tap coefficients for the IIR filter.

FIG. 1

**Description**

TECHNICAL FIELD

The present invention relates to a waveform equalizing device for removing multipath interference in broadcasting and radio communication.

BACKGROUND ART

Some receivers in broadcasting and radio communication are equipped with a waveform equalizing device for removing multipath interference. The multipath interference is a phenomenon in which since a broadcast signal reaches a receiver via different paths including a major path and the other paths, an interference wave between a main signal having traveled via the major path and a reflected signal or the like (ghost signal) having traveled via another path is observed in the receiver. The waveform equalization device restores the main signal of which reception is desired from the multipath-caused interference wave.

In a waveform equalizing device having a finite impulse response (FIR) filter and an infinite impulse response (IIR) filter, a pre-ghost signal and a post-ghost signal are removed by equalization using tap coefficients for the filters. Such tap coefficients will be described.

The relationship

$$X \cdot G_{FIR}(z) + Y \cdot G_{IIR}(z) = Y$$

is satisfied where $G_{FIR}(z)$ is a characteristic of the FIR filter, $G_{IIR}(z)$ is a characteristic of the IIR filter, and X and Y are respectively an input signal and an output signal of the waveform equalizing device. This equation can be changed to

$$Y = GX = \{G_{FIR}(z) / (1 - G_{IIR}(z))\}X$$

where G is a characteristic of the waveform equalizing device.

If there exists a post-ghost signal having a signal intensity A (A < 1) delayed by 5 symbols with respect to a main signal E, the input signal X is expressed by

$$X = (1 + AZ^{-5})E.$$

Assuming that $G_{FIR}(z) = 1$ and $G_{IIR}(z) = -AZ^{-5}$, the following equation is satisfied.

$$Y = \{1 / (1 + AZ^{-5})\}(1 + AZ^{-5})E = E \ \dots \ (1)$$

That is, the input signal X can be equalized by providing -A as the tap coefficient for the fifth tap of the IIR filter.

If there exists a pre-ghost signal having a signal intensity A prior to the main signal E by 5 symbols, the input signal X is expressed by

$$X = (A + Z^{-5})E.$$

Assuming that the FIR filter is a filter having 20 taps and that $G_{IIR}(z) = 0$ and $G_{FIR}(z) = A^4 - A^3Z^{-5} + A^2Z^{-10} - AZ^{-15} + Z^{-20}$, the following equation is satisfied.

$$Y = \{A^4 - A^3Z^{-5} + A^2Z^{-10} - AZ^{-15} + Z^{-20}\}(A + Z^{-5})E = (A^5 + Z^{-25})E \ \dots \ (2)$$

That is, the input signal X can be equalized by respectively providing $A^4$, $-A^3$, $A^2$, $-A$ and 1 as the tap coefficients for the 0-th, fifth, tenth, fifteenth and twentieth taps of the FIR filter and considering that $A^5$ is sufficiently small.

As described above, in removal of a pre-ghost signal, a larger number of proper tap coefficients must be given to the filter than in removal of a post-ghost signal. Therefore, equalization is generally considered difficult when a pre-ghost signal exists compared with when a post-ghost signal exists. Also, equalization of a signal containing a pre-ghost signal is very difficult when the value of the signal intensity A is very large or the number of taps of the FIR filter is insufficient.

The optimum values of tap coefficients are found out with an adaptive algorithm (e.g., least mean square (LMS) algorithm). The LMS algorithm is an algorithm of generating next-time tap coefficients from the last-time tap coefficients. The tap coefficients are gradually closer to the optimum values as being updated repeatedly. Hence, the convergence time of the LMS algorithm will be shortened as the initial values of the tap coefficients are closer to their optimum values.

For example, in decoding of a vestigial-sideband (VSB) modulated signal, it takes time for a waveform equalizing device having a FIR filter and an IIR filter to converge tap coefficients to their optimum values. To address this problem, a waveform equalizing device is known in which the initial values of tap coefficients are given to a FIR filter and an IIR filter so as to cancel any wave other than the main signal (see Patent Document 1). Also known is a device provided with a filter for determining tap coefficients in response to the estimated results of channel response to perform waveform equalization using the determined tap coefficients (see Non-Patent Document 1).

Patent Document 1: Japanese Laid-Open Patent Publication No. 2000-244777
Non-Patent Document 1: Yiyan Wu et al, "An ATSC DTV Receiver With Improved Robustness to Multipath and Distributed Transmission Environments", (US), IEEE TRANSACTIONS ON BROADCASTING, IEEE, March 2004, Vol. 50, No. 1, pp. 32-41

DISCLOSURE OF THE INVENTION

PROBLEMS TO BE SOLVED BY THE INVENTION

However, determination of the optimum initial values of tap coefficients is difficult in the case of receiving a signal containing a large pre-ghost signal or a signal containing a plurality of pre-ghost signals. In such cases, therefore, the time required for convergence of tap coefficients may increase, or tap coefficients may be converged to wrong values, resulting in degradation in waveform equalization performance. Also, in determination of the initial values of tap coefficients, correlation is determined between the received signal and a predetermined signal. If a large amount of noise is generated in the correlation result, however, the time required for convergence of tap coefficients may increase, or tap coefficients may be converged to wrong values

To equalize a signal containing a large pre-ghost signal, the required delay amount of the FIR filter will be great, and this increases the circuit area. Also, if a filter that can reduce a pre-ghost signal is provided upstream of a waveform equalizing device, as in Non-Patent Document 1, degradation in waveform equalization performance may occur depending on tap coefficients given to this filter, and further the circuit area may be increased.

An object of the present invention is preventing degradation in waveform equalization performance, which may occur due to convergence of tap coefficients for a filter for removing a ghost signal to wrong values, and allowing tap coefficients to be converged to their optimum values in a short time, even when a signal containing a large pre-ghost signal is received.

MEANS FOR SOLVING THE PROBLEMS

The waveform equalizing device of the present invention is a waveform equalizing device for performing waveform equalization for an input signal and outputting the equalization result as an output signal, including: a finite impulse response (FIR) filter for performing convolution operation between the input signal and a plurality of tap coefficients and outputting the result; an infinite impulse response (IIR) filter for performing convolution operation between the output signal and a plurality of tap coefficients and outputting the result; an addition section for summing the output of the FIR filter and the output of the IIR filter and outputting the sum as the output signal; an error detection section for detecting an error in the output signal and outputting the error as error information; a pattern signal generation section for generating a predetermined pattern signal; a correlation operation section for performing convolution operation between the input signal and the pattern signal to determine a plurality of correlation values respectively corresponding to delays different from one another and outputting the plurality of correlation values; an initial tap coefficient generation section for determining and outputting the initial values of tap coefficients for the FIR filter and the IIR filter based on the plurality of correlation values; and a tap coefficient updating section for outputting the initial values of tap coefficients for the FIR filter and the IIR filter to the FIR filter and the IIR filter and updating tap coefficients for the FIR filter and the IIR filter based on the error information, wherein the initial tap coefficient generation section reverses the order of values, among the plurality of correlation values, corresponding to delays within a predetermined range to determine the order-reversed values as the initial values of tap coefficients for the FIR filter corresponding to the delays within the predetermined range, and also reverses the signs of values, among the plurality of correlation values, corresponding to delays exceeding the predetermined range to determine the sign-reversed values as the initial values of tap coefficients for the IIR filter.

With the above configuration, in which the order of values, among a plurality of correlation values, corresponding to delays within a predetermined range is reversed to use the results as initial values of tap coefficients for the FIR filter, a pre-ghost signal can be converted to a post-ghost signal. Hence, even when a signal containing a large pre-ghost signal is received, it is possible to prevent degradation in waveform equalization performance that may otherwise occur due to convergence of tap coefficients for the filter to wrong values, and also shorten the time required for convergence of tap coefficients.

EFFECT OF THE INVENTION

According to the present invention, even when a signal containing a large pre-ghost signal or a signal containing noise is received, degradation in waveform equalization performance can be prevented, which may otherwise occur due to convergence of tap coefficients for a filter to wrong values, and tap coefficients can be converged to optimum values in a short time. Also, since the number of taps of a filter can be reduced, the circuit area can be made small.

BRIEF DESCRIPTION OF THE DRAWINGS

[FIG. 1] FIG. **1** is a block diagram of a waveform equalizing device of an embodiment of the present invention.
[FIG. 2] FIG. **2** is a block diagram of a FIR filter in FIG. **1**.
[FIG. 3] FIGS. **3(a), 3(b)** and **3(c)** are graphs respectively showing examples of an input signal **X**, the initial values of tap coefficients for the FIR filter and an output signal **Y** in the waveform equalizing device of FIG. **1**.
[FIG. 4] FIG. **4(a)** is a graph showing an example of normalized correlation values determined from an actually received VSB signal, and FIG. **4(b)** is a graph showing the results of squaring of the respective normalized correlation values in FIG. **4(a)**.
[FIG. 5] FIG. **5(a)** is a graph showing normalized correlation values, and FIG. **5(b)** is a graph showing the initial values of tap coefficients given to the FIR filter and an IIR filter in the case of FIG. **5(a)**.

DESCRIPTION OF REFERENCE NUMERALS

10    FIR filter
20    IIR filter
32    Pattern signal generation section
34    Correlation operation section
36    Initial tap coefficient generation section
38    Error detection section
42    Tap coefficient updating section
44    Addition section

BEST MODE FOR CARRYING OUT THE INVENTION

Hereinafter, an embodiment of the present invention will be described with reference to the relevant drawings.

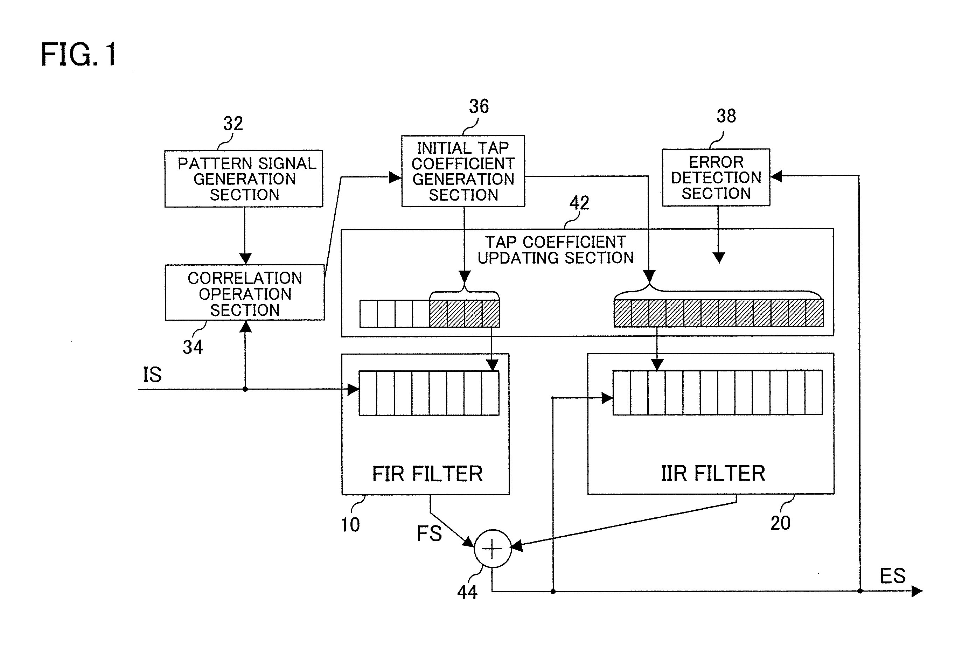

FIG. **1** is a block diagram of a waveform equalizing device of an embodiment according to the present invention. The waveform equalizing device of FIG. **1** includes a FIR filter **10,** an IIR filter **20,** a pattern signal generation section **32,** a correlation operation section 34, an initial tap coefficient generation section **36,** an error detection section **38**, a tap coefficient updating section **42** and an addition section **44**. This waveform equalizing device is used in an Advanced Television Systems Committee (ATSC) defined vestigial-sideband (VSB) receiver, for example.
The FIR filter **10** delays an input signal IS to obtain a plurality of tap values having delays different from one another by a predetermined time each. The FIR filter **10** performs convolution operation, using the resultant tap values, between the input signal IS and a plurality of tap coefficients respectively corresponding to the tap values, and outputs the results to the addition section **44**. The IIR filter **20** delays an output signal ES to obtain a plurality of tap values having delays different from one another by a predetermined time each. The IIR filter **20** performs convolution operation, using the resultant tap values, between the output signal ES and a plurality of tap coefficients respectively corresponding to the tap values, and outputs the results to the addition section **44**.

The addition section **44** sums the output of the FIR filter **10** and the output of the IIR filter **20,** and outputs the result as the output signal ES. The error detection section **38** detects an error in the output signal ES and outputs the resultant error to the tap coefficient updating section **42** as error information.

The pattern signal generation section **32** generates a pattern signal having a predetermined pattern and outputs the signal to the correlation operation section **34**. The correlation operation section **34** performs convolution operation between the pattern signal generated in the pattern signal generation section **32** and a pattern signal in the input signal IS to determine a sequence of correlation values, and outputs the result to the initial tap coefficient generation section **36**. These correlation values represent channel responses, where the respective correlation values $R_i$ (i is an integer) correspond to delays $iT_S$ ($T_S$ is a symbol interval) different from one another with respect to the main signal.

The initial tap coefficient generation section **36** normalizes the plurality of correlation values $R_i$ determined in the correlation operation section **34** with the maximum of these correlation values to obtain a plurality of normalized correlation values $S_i$, determines initial values of tap coefficients for the FIR filter **10** and the IIR filter **20** based on the normalized correlation values $S_i$, and outputs the results to the tap coefficient updating section **42**.

The tap coefficient updating section **42** outputs the initial values received from the initial tap coefficient generation section **36** to the FIR filter **10** and the IIR filter **20** as the tap coefficients. The coefficient updating section **42** updates the tap coefficients based on an error detected in the error detection section **38** using an LMS algorithm, for example, and outputs the resultant new tap coefficients to the FIR filter **10** and the IIR filter **20.**

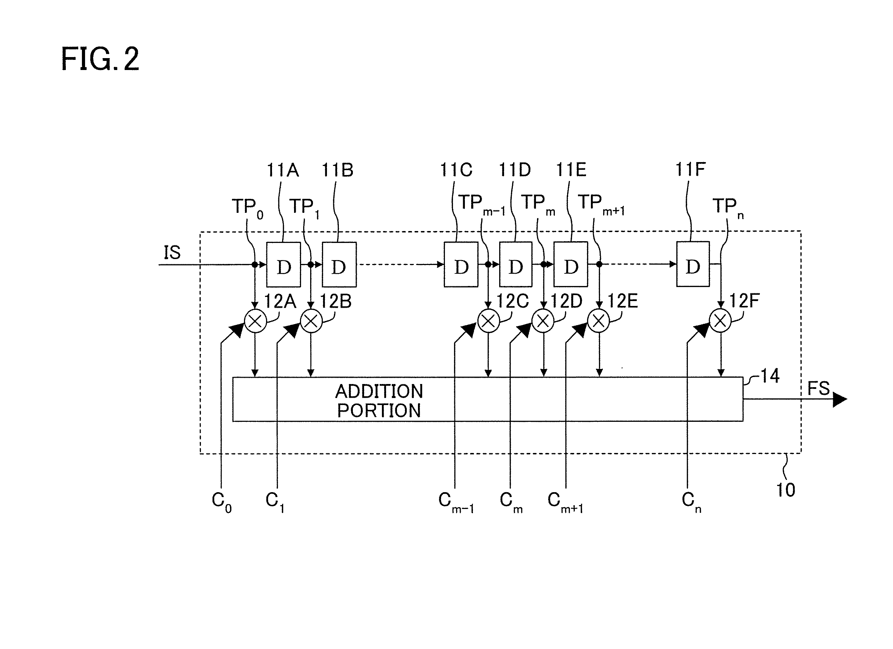

FIG. **2** is a block diagram of the FIR filter **10** in FIG. **1**. The FIR filter **10** includes delay devices **11A, 11B,** ..., **11C, 11D, 11E,** ..., **11F,** multipliers **12A, 12B, ..., 12C**, **12D, 12E,** ... **12F,** and an addition portion **14.**

The delay devices **11A** to **11F** are registers, for example, whose outputs are respectively connected with inputs of the next registers. The delay devices **11A** to **11F** delay their inputted signals by a delay $T_S$ and output the delayed signals. The input of the delay device 11A is referred to as tap $TP_0$, and the outputs of the delay devices **11A** to **11F** as $TP_1$, $TP_2$, ..., $TP_n$ (n is a natural number). Tap coefficients $C_0$, $C_1$, ..., $C_n$ respectively correspond to the taps $TP_0$ to $TP_n$. The IIR filter **20** has substantially the same configuration as the FIR filter **10** shown in FIG. **2** except for being different in the number of taps and the tap coefficients.

The multipliers **12A** to **12F** respectively multiply the values of the taps $TP_0$ to $TP_n$ by their corresponding tap coefficients $C_0$ to $C_n$, and output the multiplication results to the addition portion **14**. The addition portion **14** sums up all the multiplication results from the multipliers **12A** to **12F,** and outputs the result to the addition section **44** as an output FS.

Generation of the initial values of tap coefficients in the initial tap coefficient generation section **36** will be described. Assume that the normalized correlation value corresponding to the main signal is $S_n$ and the normalized correlation value corresponding to a signal preceding the main signal by $kT_S$ (k is an integer) is $S_{n-k}$. Assume also that the tap coefficient $C_n$ for the FIR filter **10** is made to correspond to the main signal and the tap coefficient $C_{n-k}$ is made to correspond to the signal preceding the main signal by $kT_S$.

The initial tap coefficient generation section **36** determines $C_m = S_n/2$, $C_{m+1} = S_{n-1}$, $C_{m+2} = S_{n-2}$, ..., $C_n = S_m$ as the initial values of tap coefficients for the FIR filter **10**, e.g., the tap coefficients $C_m$, $C_{m+1}$, ..., $C_n$ for the taps $TP_m$ (m is an integer satisfying 0=m<n) to $TP_n$, which correspond to delays within a predetermined range with respect to the main signal, and supplies the resultant initial values to the tap coefficient updating section **42**. In other words, the initial tap coefficient generation section **36** reverses the order of normalized correlation values $S_m$, $S_{m+1}$, ..., $S_n$ corresponding to delays $-(n-m)T_S$, $-(n-m-1)T_S$, ..., $T_S$, 0 with respect to the main signal, to determine the results as the initial values of the tap coefficients $C_m$, $C_{m+1}$, ..., $C_n$. At this time, the correlation value $S_n$ corresponding to the main signal is considered as the maximum of the correlation values and is multiplied by 0.5. The initial tap coefficient generation section **36** supplies 0 as the initial values of the tap coefficients $C_0$, $C_1$, ..., $C_{m-1}$.

Also, the initial tap coefficient generation section **36** reverses the signs of normalized correlation values $S_{n+1}$, $S_{n+2}$, ..., $S_{n+p}$ (p is the number of taps of the IIR filter **20),** to determine the results as the initial values of tap coefficients for the IIR filter **20,** and supplies the resultant values to the tap coefficient updating section **42**. In this way, the correlation values corresponding to delays of 0 or less correspond to the tap coefficients for the FIR filter **10,** and the correlation values corresponding to delays of $T_S$ or more correspond to the tap coefficients for the IIR filter **20.**

An example of operation of the waveform equalizing device of FIG. **1** will be described. If there exists a ghost signal having a signal intensity A (A < 1) prior to the main signal E by T symbol(s), the channel response G can be expressed by $G = A + Z^{-T}$, and then the input signal X is expressed by

$$X = GE = (A + Z^{-T})E.$$

In the above case, since $S_{n-T} = A$ and $S_n = 1$ are determined as the normalized correlation values $S_{n-T}$ and $S_n$

based on the correlation values determined in the correlation operation section **34,** the initial tap coefficient generation section **36** reverses the order of the correlation values $S_{n-T}$ and $S_n$ and divides the correlation value $S_n$ corresponding to the main signal by 2, to use the resultant correlation values $S_n/2$ and $S_{n-T}$ as the initial values of the tap coefficients $C_{n-T}$ and $C_n$, respectively. At this time, the initial value I of the transfer function of the waveform equalizing device of FIG. **1** is

$$I = (0.5 + AZ^{-T}).$$

The output signal Y is

$$Y = XI = (A + Z^{-T})E \times (0.5 + AZ^{-T})$$

$$= \{0.5A + (A^2 + 0.5)Z^{-T} + AZ^{-2T}\}E.$$

Assuming that A = 0.7 and T = 20, for example, the followings are satisfied.

$$\text{Input signal: } X = (0.7 + Z^{-20})E$$

$$\text{Initial value: } I = (0.5 + 0.7Z^{-20})$$

$$\text{Output signal: } Y = 0.35 + 0.99Z^{-20} + 0.7Z^{-40}$$

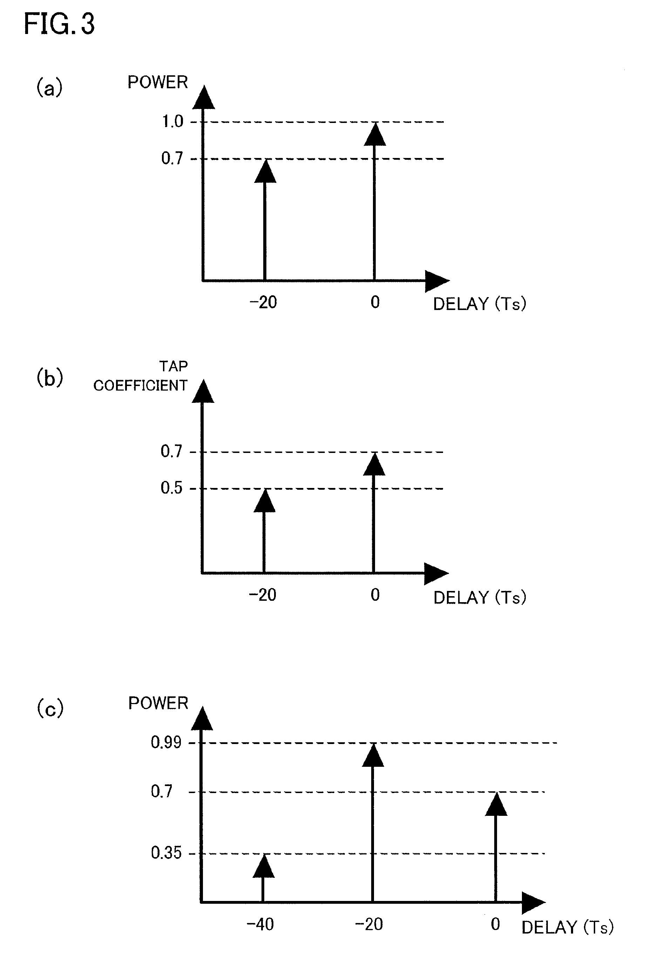

FIGS. **3(a), 3(b)** and **3(c)** are graphs showing examples of the input signal X, the initial values of tap coefficients for the FIR filter **10** and the output signal Y, respectively, for the waveform equalizing device of FIG. **1**. When values as shown in FIG. **3(b)** are given as the initial values of tap coefficients for taps of the FIR filter **10** within a predetermined range, the output signal Y as shown in FIG. **3(c)** is obtained from the input signal X as shown in FIG. **3(a).** In other words, a signal containing a pre-ghost signal as shown in FIG. **3(a)** can be converted to a signal containing a post-ghost signal as shown in FIG. **3(c)** that can be easily equalized.

As described above, in this embodiment, convergence of tap coefficients to optimum values can be made even when a signal containing a large pre-ghost signal is received because tap coefficients with which such a signal can be converted to a signal containing a post-ghost signal are provided as the initial values. This prevents convergence of tap coefficients to wrong values and can shorten the convergence time. Also, since the delays imparted by the FIR filter can be small, the circuit area can be reduced.

Note that if the initial value of a tap coefficient for the IIR filter **20** falls short of a predetermined threshold, the initial tap coefficient generation section **36** may output 0 as the initial value of the tap coefficient.

Alternatively, the initial tap coefficient generation section **36** may output 0 as the initial values of all the tap coefficients for the IIR filter **20**.

The initial tap coefficient generation section **36** may output 0 as the initial values of tap coefficients other than a tap coefficient corresponding to the maximum of the correlation values, among tap coefficients for the FIR filter **10** corresponding to delays within a predetermined range.

Alternatively, if the initial value of a tap coefficient for the FIR filter **10** corresponding to a delay within a predetermined range falls short of a predetermined threshold, the initial tap coefficient generation section **36** may output 0 as the initial value of the tap coefficient.

In the above description, the initial tap coefficient generation section **36** multiplied the maximum of the correlation values by 0.5. Alternatively, the maximum value may be used as it is without being multiplied by 0.5.

The maximum of the correlation values may otherwise be multiplied by a predetermined coefficient less than 1. This can prevent convergence of tap coefficients to wrong values and shorten the time required for convergence of tap coefficients even when a signal containing a large pre-ghost signal is received.

The FIR filter **10** may perform the convolution operation using complex arithmetic for at least tap coefficients for the FIR filter **10** corresponding to delays within a predetermined range. This can shorten the time required for convergence of tap coefficients and enhance the precision of waveform equalization.

(First alteration)

The first alteration to this embodiment will be described. In this alteration, the initial tap coefficient generation section normalizes each of the correlation values determined in the correlation operation section **34** with the maximum of the correlation values and then squares each of the normalized correlation values. Thereafter, the initial tap coefficient generation section performs substantially the same processing as that performed in the case of FIG. **1** using the squared normalized correlation values in place of the normalized correlation values.

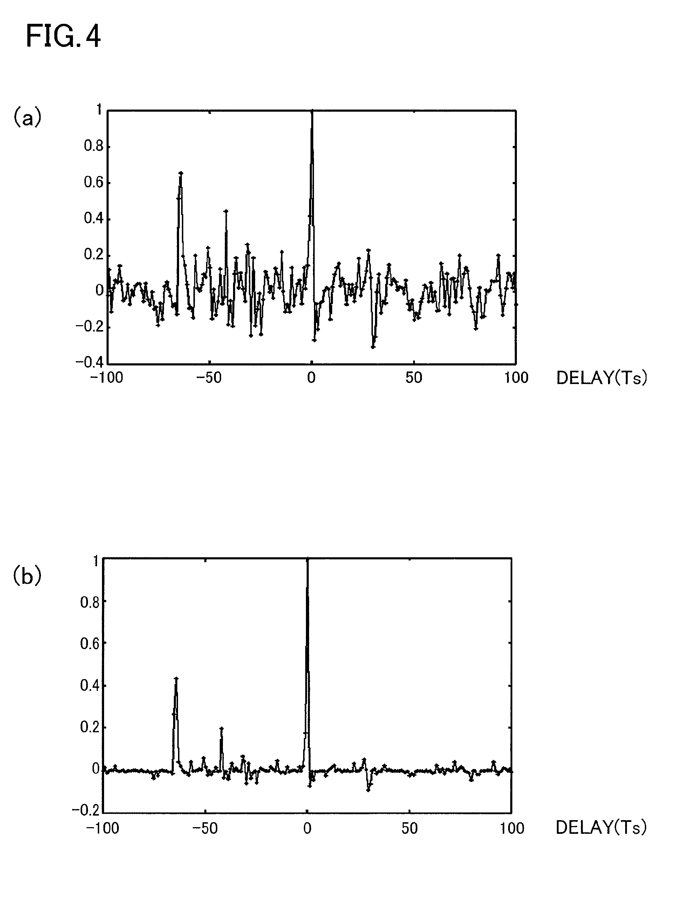

FIG. **4(a)** is a graph showing an example of normalized correlation values determined from an actually received VSB signal. FIG. **4(b)** is a graph showing the results of squaring of the respective normalized correlation values in FIG. **4(a)**. In these graphs, the x-axis represents the delay from the main signal in units of symbol intervals $T_S$.

When a signal containing a number of ghost signals and noise is received, the resultant correlation values contain a large amount of noise as shown in FIG. **4(a).** If the resultant correlation values are used as they are as the initial values of tap coefficients, the convergence of the tap coefficients is hindered, resulting in increase in the time required for the convergence. By squaring the respective normalized correlation values, the correlation values other than those corresponding to large ghost signals can be reduced to roughly 0 as shown in FIG. **4(b).**

As described above, in this alteration, even when a signal whose correlation values contain a large amount of noise is received, convergence of tap coefficients to wrong values is prevented, and the time required for convergence of tap coefficients can be shortened.

(Second alteration)

The second alteration to this embodiment will be described. In this alteration, the initial tap coefficient generation section determines the range of delays corresponding to the correlation values $S_m$, $S_{m+1}$, ..., $S_n$, the order of which is to be reversed, so as to include a correlation value equal to or more than a predetermined threshold, among the correlation values. In other words, if a normalized correlation value equal to or more than a threshold Th exists prior to the main signal by $DT_S$ (D is a natural number), the initial tap coefficient generation section determines the range of delays from 0 to $(D+S)T_S$ earlier (S is a natural constant) so as to include the correlation value in question. When no normalized correlation value larger than the threshold Th exists prior to the main signal, D = 0 is determined. The other aspects of this alteration are substantially the same as those in the embodiment described above.

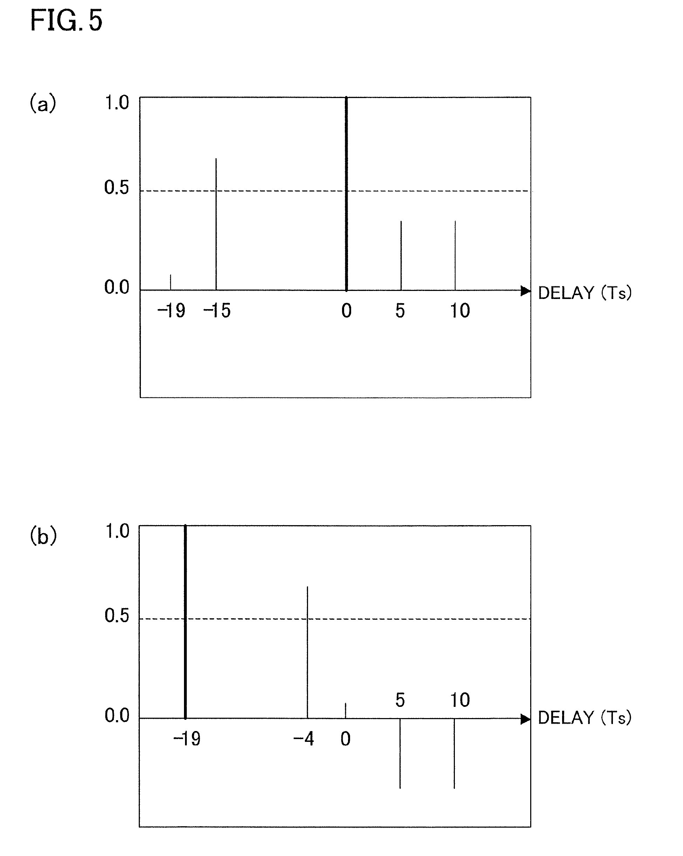

FIG. **5(a)** is a graph showing normalized correlation values. FIG. **5(b)** is a graph showing the initial values of tap coefficients given to the FIR filter **10** and the IIR filter **20** in the case shown in FIG. **5(a)**. The x-axis represents the delay with respect to the main signal.

Assume that the threshold Th = 0.5 and the constant S = 4, for example. In FIG. **5(a)**, since a normalized correlation value of 0.5 or more is found at a position prior to the main signal by $15T_S$ (15 taps), D = 15 is determined. Hence, the range of delays corresponding to the correlation values $S_m$, $S_{m+1}$, ..., $S_n$, the order of which is to be reversed, is from 0 to $(D+S)T_S = (15+4)T_S = 19Ts$.

The initial tap coefficient generation section then reverses the order of the normalized correlation values within the above range, that is, the normalized correlation values corresponding to delays from 0 to $-19T_S$, and uses the results with the signs unchanged as the initial values of the corresponding tap coefficients for the FIR filter **10**. Also, the initial tap coefficient generation section reverses the signs of the normalized correlation values corresponding to delays $T_S$ or more, and uses the results as the initial values of the corresponding tap coefficients for the IIR filter **20.** The initial values computed in the manner described above are as shown in FIG. **5(b).**

As described above, in this alteration, the optimum initial values of tap coefficients can be determined according to the magnitude of a pre-ghost signal contained in a received signal and the time difference thereof with respect to the main signal. It is therefore possible to equalize a signal containing a pre-ghost signal at a position greatly distant from the main signal. If no large pre-ghost signal exists, the range of delays corresponding to the correlation values, the order of which is to be reversed, will be small. Therefore, the correlation value corresponding to the main signal (the largest coefficient in FIG. **5(a))** can be used for a tap coefficient corresponding to a delay near 0, and this permits removal of a pre-ghost signal more distant from the main signal.

INDUSTRIAL APPLICABILITY

As described above, according to the present invention, even when a signal containing a large pre-ghost signal is received, tap coefficients for a filter for waveform equalization can be swiftly converged to optimum values. The present invention is therefore useful for a waveform equalizing device and the like.

**Claims**

1. A waveform equalizing device for performing waveform equalization for an input signal and outputting the equalization result as an output signal, comprising:

   a finite impulse response (FIR) filter for performing convolution operation between the input signal and a plurality of tap coefficients and outputting the result;
   an infinite impulse response (IIR) filter for performing convolution operation between the output signal and a plurality of tap coefficients and outputting the result;
   an addition section for summing the output of the FIR filter and the output of the IIR filter and outputting the sum as the output signal;
   an error detection section for detecting an error in the output signal and outputting the error as error information;
   a pattern signal generation section for generating a predetermined pattern signal;
   a correlation operation section for performing convolution operation between the input signal and the pattern signal to determine a plurality of correlation values respectively corresponding to delays different from one another and outputting the plurality of correlation values;
   an initial tap coefficient generation section for determining and outputting the initial values of tap coefficients for the FIR filter and the IIR filter based on the plurality of correlation values; and
   a tap coefficient updating section for outputting the initial values of tap coefficients for the FIR filter and the IIR filter to the FIR filter and the IIR filter and updating tap coefficients for the FIR filter and the IIR filter based on the error information,

   wherein the initial tap coefficient generation section reverses the order of values, among the plurality of correlation values, corresponding to delays within a predetermined range to determine the order-reversed values as the initial values of tap coefficients for the FIR filter corresponding to the delays within the predetermined range, and also reverses the signs of values, among the plurality of correlation values, corresponding to delays exceeding the predetermined range to determine the sign-reversed values as the initial values of tap coefficients for the IIR filter.

2. The waveform equalizing device of Claim 1, wherein the initial tap coefficient generation section normalizes the plurality of correlation values with the maximum of the plurality of correlation values and uses the normalized values.

3. The waveform equalizing device of Claim 2, wherein the initial tap coefficient generation section squares each of the plurality of normalized correlation values and uses the squared values.

4. The waveform equalizing device of Claim 1, wherein if the initial value of a tap coefficient for the IIR filter is less than a predetermined threshold, the initial tap coefficient generation section outputs 0 as the initial value of the tap coefficient.

5. The waveform equalizing device of Claim 1, wherein the initial tap coefficient generation section outputs 0 as the initial values of all tap coefficients for the IIR filter.

6. The waveform equalizing device of Claim 1, wherein the initial tap coefficient generation section outputs 0 as the initial value of a tap coefficient other than a tap coefficient corresponding to the maximum of the correlation values, among tap coefficients for the FIR filter corresponding to delays within the predetermined range.

7. The waveform equalizing device of Claim 1, wherein if the initial value of a tap coefficient for the FIR filter corresponding to a delay within the predetermined range is less than a predetermined threshold, the initial tap coefficient generation section outputs 0 as the initial value of the tap coefficient.

8. The waveform equalizing device of Claim 1, wherein the initial tap coefficient generation section multiplies the maximum of the correlation values by a predetermined coefficient less than 1.

9. The waveform equalizing device of Claim 1, wherein the initial tap coefficient generation section determines the predetermined range so as to include a correlation value equal to or more than a predetermined threshold among the correlation values.

10. The waveform equalizing device of Claim 1, wherein the FIR filter performs convolution operation using complex arithmetic for at least a tap coefficient for the FIR filter corresponding to a delay within the predetermined range.

# FIG.1

EP 2 075 924 A1

# FIG.2

EP 2 075 924 A1

# FIG. 3

(a)

(b)

(c)

# FIG. 4

(a)

DELAY(Ts)

(b)

DELAY(Ts)

# FIG.5

(a)

(b)

## INTERNATIONAL SEARCH REPORT

| International application No. |
| --- |
| PCT/JP2007/068846 |

A. CLASSIFICATION OF SUBJECT MATTER
*H04B7/005*(2006.01)i, *H04B3/10*(2006.01)i

According to International Patent Classification (IPC) or to both national classification and IPC

B. FIELDS SEARCHED

Minimum documentation searched (classification system followed by classification symbols)
H04B7/005, H04B3/04-3/18, H04N5/21, H04B1/10

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2000-244777 A (Matsushita Electric Industrial Co., Ltd.), 08 September, 2000 (08.09.00), Par. Nos. [0040] to [0045]; Figs. 1 to 3 (Family: none) | 1-10 |
| A | JP 2005-204186 A (Matsushita Electric Industrial Co., Ltd.), 28 July, 2005 (28.07.05), Par. Nos. [0002] to [0005]; Fig. 22 (Family: none) | 1-10 |
| A | JP 2001-257627 A (Kawasaki Steel Corp.), 21 September, 2001 (21.09.01), Par. Nos. [0019] to [0023]; Fig. 3 & US 2002/0159505 A1 & EP 1176733 A1 & WO 2001/069808 A1 | 1-10 |

| ☐ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search 19 December, 2007 (19.12.07) | Date of mailing of the international search report 08 January, 2008 (08.01.08) |
| --- | --- |
| Name and mailing address of the ISA/ Japanese Patent Office | Authorized officer |
| Facsimile No. | Telephone No. |

Form PCT/ISA/210 (second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000244777 A

**Non-patent literature cited in the description**

- **Yiyan Wu et al.** An ATSC DTV Receiver With Improved Robustness to Multipath and Distributed Transmission Environments. *(US), IEEE TRANSACTIONS ON BROADCASTING, IEEE,* March 2004, vol. 50 (1), 32-41